# EUROPEAN PATENT SPECIFICATION

(11) **EP 2 376 540 B1**
(45) Date of publication and mention of the grant of the patent: **03.04.2013**
(21) Application number: 10700769.2
(22) Date of filing: 07.01.2010
(51) Int. Cl.: C08F 2/00, C08F 10/02

(54) **ADDITIVE FOR POLYOLEFIN POLYMERIZATION PROCESSES**
ZUSATZSTOFF FÜR POLYOLEFINPOLYMERISIERUNGSVERFAHREN
ADDITIF POUR DES PROCÉDÉS DE POLYMÉRISATION DE POLYOLÉFINES

(30) Priority: 08.01.2009 US 204608 P
(43) Date of publication of application: 19.10.2011
(73) Proprietor: Univation Technologies, LLC, Houston, TX 77056 (US)
(72) Inventor: HUSSEIN, David, F., Cross Lanes WV 25313 (US); MUHLE, Michael, E., Kingwood TX 77345 (US)
(74) Representative: Hayes, Adrian Chetwynd
(86) International application number: PCT/US2010/020312
(87) International publication number: WO 2010/080870

(56) References cited:
- EP-A1- 0 453 116
- WO-A1-2004/060931
- WO-A1-2005/044863
- GB-A- 1 505 366
- JP-A- 2000 191 719
- US-A- 4 181 787
- US-A- 4 855 370
- US-A- 5 397 849
- US-A- 5 405 922
- US-A1- 2005 148 742

## Description

### FIELD OF THE INVENTION

Embodiments disclosed herein relate generally to use of additives in polymerization processes. More specifically, embodiments disclosed herein relate to the use of polyethyleneimine or ethyleneimine copolymers as an additive.

### BACKGROUND

Metallocene catalysts allow the production of polyolefins with unique properties such as narrow molecular weight distributions and narrow chemical compositions. These properties in turn result in improved structural performance in products made with the polymers, such as greater impact strength and clarity in films. While metallocene catalysts have yielded polymers with improved characteristics, they have presented new challenges when used in traditional polymerization systems.

For example, when metallocene catalysts are used in fluidized bed reactors, "sheeting" and the related phenomena "drooling" may occur. See U.S. Patent Nos. 5,436,304 and 5,405,922. "Sheeting" is the adherence of fused catalyst and resin particles to the walls of the reactor. "Drooling" or dome sheeting occurs when sheets of molten polymer form on the reactor walls, usually in the expanded section or "dome" of the reactor, and flow along the walls of the reactor and accumulate at the base of the reactor. Dome sheets are typically formed much higher in the reactor, on the conical section of the dome, or on the hemi-spherical head on the top of the reactor.

Sheeting and drooling may be a problem in commercial gas phase polyolefin production reactors if the risk is not properly mitigated. The problem is characterized by the formation of large, solid masses of polymer on the walls of the reactor. These solid masses or polymer (the sheets) may eventually become dislodged from the walls and fall into the reaction section, where they may interfere with fluidization, block the product discharge port, and usually force a reactor shut-down for cleaning.

Various methods for controlling sheeting have been developed. These often involve monitoring the static charges near the reactor wall in regions where sheeting is known to develop and introducing a static control agent into the reactor when the static levels fall outside a predetermined range. For example, U.S. Patent Nos. 4,803,251 and 5,391,657 disclose the use of various chemical additives in a fluidized bed reactor to control static charges in the reactor. A positive charge generating additive is used if the static charge is negative, and a negative charge generating additive is used if the static charge is positive.

U.S. Patent Nos. 4,803,251 and 5,391,657 disclose that static plays an important role in the sheeting process with Ziegler-Natta catalysts. When the static charge levels on the catalyst and resin particles exceed certain critical levels, the particles become attached by electrostatic forces to the grounded metal walls of the reactor. If allowed to reside long enough on the wall under a reactive environment, excess temperatures can result in particle sintering and melting, thus producing the sheets or drools.

U.S. Patent No. 4,532,311 discloses the use of a reactor static probe (the voltage probe) to obtain an indication of the degree of electrification of the fluid bed. U.S. Patent No. 4,855.370 combined the static probe with addition of water to the reactor (in the amount of 1 to 10 ppm of the ethylene feed) to control the level of static in the reactor. This process has proven effective for Ziegler-Natta catalysts, but has not been effective for metallocene catalysts.

For conventional catalyst systems such as traditional Ziegler-Natta catalysts or chromium-based catalysts, sheet formation usually occurs in the lower part of the fluidized bed. Formation of dome sheets rarely occurs with Ziegler-Natta catalysts. For this reason, the static probes or voltage indicators have traditionally been placed in the lower part on the reactor. For example, in U.S. Patent No. 5,391,657, the voltage indicator was placed near the reactor distributor plate. See also U.S. Patent No. 4,855,370. The indicators were also placed close to the reactor wall, normally less than 2 cm from the wall.

U.S. Patent No. 6,548,610 describes a method of preventing dome sheeting (or "drooling") by measuring the static charge with a Faraday drum and feeding static control agents to the reactor as required to maintain the measured charge within a predetermined range. Conventional static probes are described in U.S. Patent Nos. 6,008,662, 5,648,581, and 4,532,311. Other background references include WO 99/61485, WO 2005/068507, EP 0 811 638 A, EP 1 106 629 A, and U.S. Patent Application Publication Nos. 2002/103072 and 2008/027185.

As a result of the risks associated with reactor discontinuity problems when using metallocene catalysts, various techniques have been developed that are said to result in improved operability. For example, various supporting procedures or methods for producing a metallocene catalyst system with reduced tendencies for fouling and better operability have been discussed in U.S. Patent No. 5,283,278, which discloses the prepolymerization of a metallocene catalyst. Other supporting methods are disclosed in U.S. Patent Nos. 5,332,706, 5,473,028, 5,427,991, 5,643,847, 5,492,975, 5,661,095, and PCT publication WO 97/06186, WO 97/15602, and WO 97/27224.

Others have discussed different process modifications for improving reactor continuity with metallocene catalysts and conventional Ziegler-Natta catalysts. See, PCT Publications WO 96/08520, WO 97/14721, and U.S. Patent Nos. 5,627,243, 5,461,123, 5,066,736, 5,610,244, 5126,414, and EP-A1 0 549 252. There are various other known methods for improving operability including coating the polymerization equipment, controlling the polymerization rate, particularly on start-up, and reconfiguring the reactor design and injecting various agents into the reactor.

With respect to injecting various agents into the reactor, antistatic agents and process "continuity additives" have been the subject of various publications. For example, EP 0 453116 discloses the introduction of antistatic agents to the reactor for reducing the amount of sheets and agglomerates. U.S. Patent No. 4,012,574 discloses adding a surface-active compound having a perfluorocarbon group to the reactor to reduce fouling. WO 96/11961, discloses an antistatic agent for reducing fouling and sheeting in a gas, slurry or liquid pool polymerization process as a component of a supported catalyst system. U.S. Patent Nos. 5,034,480 and 5,034,481 disclose a reaction product of a conventional Ziegler-Natta titanium catalyst with an antistatic agent to produce ultrahigh molecular weight ethylene polymers. For example, WO 97/46599 discloses the use of soluble metallocene catalysts in a gas phase process utilizing soluble metallocene catalysts that are fed into a lean zone in a polymerization reactor to produce stereoregular polymers. WO 97/46599 also discloses that the catalyst feedstream can contain antifoulants or antistatic agents such as ATMER 163 (commercially available from ICI Specialty Chemicals, Baltimore, Md.). Many of these references refer to anti-static agents but in most cases the static is never totally eliminated. Rather it is reduced to an acceptable level by generating a charge opposite that which currently exists in the polymerization system. In this sense, these "anti-static" agents are really "pro-static" agents that generate a countervailing charge that reduces the net static charge in the reactor. Herein we will refer to these compounds as static control agents.

Several of the above-mentioned references disclose the use of static control agents that, when introduced into a fluidized bed reactor, may influence or drive the static charge in the fluidized bed in a desired direction. Depending upon the static control agent used, the resulting static charge in the fluidized bed may be negative, positive, or a neutral charge. Static control agents, for example, may include positive charge generating species such as MgO, ZnO, CuO, alcohols, oxygen, nitric oxide, and negative charge generating species such as V₂O₅ SiOₐ, TiO₂, Fe₂O₃, water, and ketones. Other static control agents are also disclosed in EP 0229368 and U.S. Patent Nos. 5,283,278, 4,803,251, and 4,555,370, among others. As described in U.S. Patent Appl. Pub. No. 2008/027185, aluminum stearate, aluminum distearate, ethoxylated amines, OCTASTAT 2000, a mixture of a polysulfone copolymer, polymeric polyamine, and oil-soluble sulfonic acid, as well as mixtures of carboxylated metal salts with amine-containing compounds, such as those sold under the trade names KEMAMINE and ATMER, may also be used to control static levels in a reactor. Other static control agents are disclosed in U.S. Patent Application Publication No. 20050148742.

Static control agents, including several of those described above, may result in reduced catalyst productivity. The reduced productivity may be as a result of residual moisture in the additive. Additionally, reduced productivity may result from interaction of the polymerization catalyst with the static control agent, such as reaction or complexation with hydroxyl groups in the static control agent compounds. Depending upon the static control agent used and the required amount of the static control agent to limit sheeting, loss in catalyst activities of 40% or more have been observed.

Accordingly, there exists a need for additives useful, for example, for the control of static levels, and thus sheeting, in a fluidized bed reactor, especially for use with, for example, metallocene catalyst systems.

### SUMMARY

In one aspect, a process as outlined in claim 1 is disclosed.

In another aspect, a process as outlined in claim 15 is disclosed.

### DETAILED DESCRIPTION

Before the present compounds, components, compositions, and/or methods are disclosed and described, it is to be understood that unless otherwise indicated this invention is not limited to specific compounds, components, compositions, reactants, reaction conditions, ligands, metallocene structures, as such may vary, unless otherwise specified. It is also to be understood that the terminology used herein is for the purpose of describing particular embodiments only and is not intended to be limiting.

It must also be noted that, as used in the specification and the appended claims, the singular forms "a," "an" and "the" include plural referents unless otherwise specified.

Embodiments disclosed herein relate generally to use of ethyleneimine additives in polymerization processes, such as those for the production of ethylene-based and propylene-based polymers. More specifically, embodiments disclosed herein relate to the use of ethyleneimine additives comprising polyethyleneimine, ethyleneimine copolymers, or a mixture thereof to control static levels in a polymerization reactor during the production of ethylene-based or propylene-based polymers. Such ethyleneimine additives may be useful, for example, where the polymerization is catalyzed with a metallocene catalyst. The ethyleneimine additives may be added to a polymerization reactor to control static levels in the reactor, preventing, reducing, or reversing sheeting, drooling and other discontinuity events resulting from excessive static levels.

### Ethyleneimine Additive

Ethyleneimine additives useful in embodiments disclosed herein may include polyethyleneimines having the following general formula:

-(CH₂-CH₂-NH)ₙ-

where n may be from 10 to 10,000. The polyethyleneimines may be linear, branched, or hyperbranched (i.e., forming dendritic or arborescent polymer structures). They can be a homopolymer or copolymer of ethyleneimine or mixtures thereof (referred to as polyethyleneimine(s) hereafter). Although linear polymers represented by the chemical formula -[CH₂CH₂NH]-- may be used as the polyethyleneimine, materials having primary, secondary, and tertiary branches can also be used. Commercial polyethyleneimine can be a compound having branches of the ethyleneimine polymer.

Suitable polyethyleneimines are commercially available from BASF Corporation under the trade name Lupasol. These compounds can be prepared as a wide range of molecular weights and product activities. Examples of commercial polyethyleneimines sold by BASF suitable for use in the present invention include, but are not limited to, Lupasol FG and Lupasol WF.

Polyethyleneimines disclosed herein may have a molecular weight of up to 500,000 Daltons. In some embodiments, the polyethyleneimines may have a number average molecular weight of less than 50,000 Daltons; less than 25,000 Daltons in other embodiments, less than 10,000 Daltons in other embodiments; less than 5000 Daltons in other embodiments, less than 2500 Daltons in other embodiments; and less than 1500 Daltons in yet other embodiments. In some embodiments, polyethyleneimines useful in embodiments disclosed herein may have a number average molecular weight in the range from 250 to 1500 Daltons; in the range from 500 to 1000 Daltons in yet other embodiments. Such polyethyleneimines may also have a viscosity in the range from 100 to 200000 cps as measured using a Brookfield viscometer at 20°C in some embodiments; from 2000 to 200,000 cps in other embodiments; and from 2000 to 10,000 cps in other embodiments.

Polyethyleneimines disclosed herein may have a pour point of less than 10 °C, or less than 5 °C, or less than 0 °C, or less than 2 °C. In some embodiments, the polyethyleneimine has a pour point in the range of -50 °C to 10 °C, or in the range of -40°C to 5 °C, or in the range of - 30 °C to 0 °C. In some embodiments, the polyethyleneimine may have a pour point in the range of -15°C to 5 °C, or -10 °C to 0 °C, or -7 °C to -1 °C, while in other embodiments the pour point may be in the range of -40 °C to 0 °C, or -30 °C to -5 °C, or -20 °C to -10 °C. The pour point may be determined by ASTM D97.

The polyethyleneimines disclosed herein may have a density at 20 °C in the range of 0.90 to 1.20 g/cm³, or 1.00 to 1.15 g/cm³, or 1.02 to 1.12 g/cm³.

Polyethyleneimines, when fed to a polymerization reactor, have been found to be multifunctional additives. Due to the structure of polyethyleneimines, including one amine nitrogen and two carbon groups per building block, the ethyleneimine additives according to embodiments disclosed herein may have a high density of cationic charge per molecule. Thus, polyethyleneimine additives according to embodiments disclosed herein may function similar to a static control agent.

In addition to the charge characteristics, polyethyleneimines have been found to adhere to various surfaces, such as metals. Thus, when added to a polymerization reactor, polyethyleneimine additives according to embodiments disclosed herein may form a thin film coating the reactor walls and other portions of the reactor, such as the surface of feed lines, recycle lines, and other exposed surfaces in the reactor. Such coatings may prevent sheeting of polymer on such surfaces, and in some embodiments may reverse sheeting that may have previously occurred.

Polyethyleneimine additives according to embodiments disclosed herein have also been found to be reactive with various oxygenates. Thus, the polyethyleneimine additives may additionally function as a scavenger for compounds that may poison active catalyst sites. Thus, in contrast to traditional static control agents having hydroxyl groups that may poison catalysts, polyethyleneimine additives according to embodiments disclosed herein may, for example, enhance catalyst activity by scavenging catalyst poisons, in addition to the static control and reactor coating functions.

The polyethyleneimine additives may be fed to polymerization reactors as a solution or as a slurry, thus providing an effective transport medium. For example, the polyethyleneimine additives may be initially admixed or combined with mineral oil, forming a slurry that may be fed to the polymerization reactor. Polyethyleneimine is insoluble in aliphatic compounds so that when mixed with mineral oil it forms a finely dispersed suspension of the polyethyleneimine. Surprisingly, this dispersion is quite stable when formed and takes a long time to settle out from the mineral oil to any appreciable extent once formed as long as it is agitated. In other embodiments, polyethyleneimine additives may be admixed or combined with an aromatic hydrocarbon solvent such as toluene or xylene, prior to being fed to the reactor. The polyethyleneimine may also be added to the reactor in its pure or neat form without any additional admixture component.

In some embodiments, the polyethyleneimine additives may be combined admixed with a polymerization catalyst prior to feeding both to a polymerization reactor. In other embodiments, the polymerization catalyst and the polyethyleneimine additives may be fed to the polymerization reactor separately. When fed to the reactor as a combined feed, such catalyst / polyethyleneimine additive combinations or mixtures may be formed in a feed vessel or mixed within feed lines during transport to the reactor. It has been found that, compared to other continuity additives and static control agents, polyethyleneimines have a very low exotherm upon admixture with the catalyst. These low exotherms may be indicative of the impact such additives have on catalyst productivity, where use of polyethyleneimines, having a low exotherm, do not impact catalyst productivity as significantly as other continuity additives where a higher exotherm may be experienced. Embodiments disclosed herein, thus, may provide a method for screening potential continuity additives by measuring heat generated during the admixture or combining of a continuity additive with a polymerization catalyst system.

The amount of polyethyleneimine added to the reactor system may depend upon the catalyst system used, as well as reactor pre-conditioning (such as coatings to control static buildup) and other factors known to those skilled in the art. In some embodiments, the polyethyleneimine additive may be added to the reactor in an amount ranging from 0.01 to 200 ppmw, based on the polymer production rate. In other embodiments, the polyethyleneimine additive may be added to the reactor in an amount ranging from 0.02 to 100 ppmw; from 0.05 to 50 ppmw in other embodiments; and from 1 to 40 ppmw in yet other embodiments. In other embodiments, the polyethyleneimine additive may be added to the reactor in an amount of 2 ppmw or greater, based on the polymer production rate. Other suitable ranges for the polyethyleneimine additive, based on the polymer production weight include lower limits of greater than or equal to 0.01, 0.02, 0.05, 0.1, 0.5, 1, 2,3, 4, 5, 10, 12, 15 and upper limits of less than or equal to 200, 150, 100, 75, 50, 40, 30, 25, 20, where the ranges are bounded by any lower and upper limit described above.

In some embodiments, polyethyleneimine additives may be used as or in a reactor coating emplaced during or prior to conducting polymerization reactions within the reactor. Various methods for use of a continuity additive in reactor coatings or during polymer production are described in, for example, WO 2008/108913, WO 2008/108931, WO 2004/029098, U.S. Patent Nos. 6,335,402, 4,532,311, and U.S. Patent Application Publication No. 2002/026018. For example, at least one of a bed wall, a distributor plate, and a gas recycle line of a polymerization reactor may be contacted with a polyethyleneimine additive to form a coating thereupon. Formation of the coating including a polyethyleneimine prior to conducting polymerization reactions within the reactor may reduce or prevent formation of sheets in the reactor system during subsequent polymerization reactions. Further, such a coating may be sufficient to allow the polymerization reactions to be conducted in the absence of any added continuity additive or static control agents without significant formation of sheets within the reactor. Additional continuity additives and static control agents may, of course, be fed to the coated reactor, if desired. As used herein "the absence of any added continuity additive or static control agents" means that no additional continuity additives or static control agents (other than the polyethyleneimine additives that may function as a continuity additive or static control agent have been intentionally added to the reactor, and if present at all are present in the reactor at less than 0.02 ppmw, or less than 0.01 ppmw, or less than 0.005 ppmw, based on the polymer production rate.

In other embodiments, polyethyleneimine additives according to embodiments disclosed herein may interact with the particles and other components in the fluidized bed, reducing or neutralizing static charges related to frictional interaction of the catalyst and polymer particles, reacting or completing with various charge-containing compounds that may be present or formed in the reactor, as well as reacting or complexing with oxygenates and other catalyst poisons.

### Additional Continuity Additives

In addition to the polyethyleneimine additives described above, it may also be desired to additionally use one or more additional continuity additives to aid in regulating static levels in the reactor. "Additional continuity additives" as used herein also includes chemical compositions commonly referred to in the art as "static control agents." Due to the enhanced performance of the reactor systems and catalysts that may result via use of a polyethyleneimine additive as described above, the additional continuity additives may be used at a lower concentration in polymerization reactors as compared to use of the additional continuity additives alone. Thus, the impact the additional continuity additives have on catalyst productivity may not be as substantial when used in conjunction with continuity additives according to embodiments disclosed herein.

As used herein, a static control agent is a chemical composition which, when introduced into a fluidized bed reactor, may influence or drive the static charge (negatively, positively, or to zero) in the fluidized bed. The specific static control agent used may depend upon the nature of the static charge, and the choice of static control agent may vary dependent upon the polymer being produced and the catalyst being used. For example, the use of static control agents is disclosed in European Patent No. 0229368 and U.S. Patent No. 5,283,278.

For example, if the static charge is negative, then static control agents such as positive charge generating compounds may be used. Positive charge generating compounds may include MgO, ZnO, Al₂O₃, and CuO, for example. In addition, alcohols, oxygen, and nitric oxide may also be used to control negative static charges. See, U.S. Patent Nos. 4,803,251 and 4,555,370.

For positive static charges, negative charge generating inorganic chemicals such as V₂O₅, SiO₂, TriO₂, and Fe₂O₃ may be used. In addition, water or ketones containing up to 7 carbon atoms may be used to reduce a positive charge.

In some embodiments, when catalysts, such as, metallocene catalysts, are used in a circulating fluidized bed reactor, additional continuity additives such as aluminum stearate may also be employed. The additional continuity additive used may be selected for its ability to receive the static charge in the fluidized bed without adversely affecting productivity. Suitable additional continuity additives may also include aluminum distearate, ethoxlated amines, and anti-static compositions such as those provided by Innospec Inc. under the trade name OCTASTAT. For example, OCTASTAT 2000 is a mixture of a polysulfone copolymer, a polymeric polyamine, and oil-soluble sulfonic acid.

Any of the aforementioned additional continuity additives, as well as those described in, for example, WO 01/44322, listed under the heading Carboxylate Metal Salt and including those chemicals and compositions listed as antistatic agents may be employed either alone or in combination as an additional continuity additive. For example, the carboxylate metal salt may be combined with an amine containing control agent (e.g., a carboxylate metal salt with any family member belonging to the KEMAMINE (available from Crompton Corporation) or ATMER (available from ICI Americas Inc.) family of products).

Other additional continuity additives useful in embodiments disclosed herein are well known to those in the art. Regardless of which additional continuity additives are used, care should be exercised in selecting an appropriate additional continuity additive to avoid introduction of poisons into the reactor. In addition, in selected embodiments, the smallest amount of the additional continuity additives necessary to bring the static charge into alignment with the desired range should be used.

In some embodiments, additional continuity additives may be added to the reactor as a combination of two or more of the above listed additional continuity additives, or a combination of an additional continuity additive and a polyethyleneimine additive according to embodiments disclosed herein. In other embodiments, the additional continuity additive(s) may be added to the reactor in the form of a solution or a slurry, and may be added to the reactor as an individual feed stream or may be combined with other feeds prior to addition to the reactor. For example, the additional continuity additive may be combined with the catalyst or catalyst slurry prior to feeding the combined catalyst-static control agent mixture to the reactor.

In some embodiments, the additional continuity additives may be added to the reactor in an amount ranging from 0.05 to 200 ppmw. or from 2 to 100 ppmw. or from 2 to 50 ppmw. In other embodiments, the additional continuity additives may be added to the reactor in an amount of 2 ppmw or greater, based on the polymer production rate.

### Polymerization Process

Embodiments for producing polyolefin polymer disclosed herein may employ any suitable process for the polymerization of olefins, including any suspension, solution, slurry, or gas phase process, using known equipment and reaction conditions, and are not limited to any specific type of polymerization system. Generally, olefin polymerization temperatures may range from 0 to 300°C at atmospheric, sub-atmospheric, or super-atmospheric pressures. In particular, slurry or solution polymerization systems may employ sub-atmospheric, or alternatively, super-atmospheric pressures, and temperatures in the range of 40 to 300°C.

Liquid phase polymerization systems such as those described in U.S. Patent No. 3,324,095, may be used in some embodiments. Liquid phase polymerization systems generally comprise a reactor to which olefin monomers and catalyst compositions are added. The reactor contains a liquid reaction medium which may dissolve or suspend the polyolefin product. This liquid reaction medium may comprise an inert liquid hydrocarbon which is non-reactive under the polymerization conditions employed, the bulk liquid monomer, or a mixture thereof. Although such an inert liquid hydrocarbon may not function as a solvent for the catalyst composition or the polymer obtained by the process, it usually serves as solvent for the monomers used in the polymerization. Inert liquid hydrocarbons suitable for this purpose may include isobutane, isopentane, hexane, cyclohexane, isohexane, heptane, octane, benzene, toluene, and mixtures and isomers thereof. Reactive contact between the olefin monomer and the catalyst composition may be maintained by constant stirring or agitation. The liquid reaction medium which contains the olefin polymer product and unreacted olefin monomer is withdrawn from the reactor continuously. The olefin polymer product is separated, and the unreacted olefin monomer and liquid reaction medium are typically recycled and fed back into the reactor.

Some embodiments of this disclosure may be especially useful with gas phase polymerization systems, at superatmospheric pressures in the range from 0.07 to 68.9 bar (1 to 1000 psig), from 3.45 to 27.6 bar (50 to 400 psig) in some embodiments, from 6.89 to 24:1 bar (100 to 350 psig) in other embodiments, and temperatures in the range from 30 to 130°C, or from 65 to 110°C, from 75 to 120°C in other embodiments, or from 80 to 120°C in other embodiments. In some embodiments, operating temperatures may be less than 112°C. Stirred or fluidized bed gas phase polymerization systems may be of use in embodiments.

Embodiments for producing polyolefin polymer disclosed herein may also employ a gas phase polymerization process utilizing a fluidized bed reactor. This type reactor, and means for operating the reactor, are well known and are described in, for example, U.S. Patent Nos. 3,709,853; 4,003,712; 4,011,382; 4,302,566; 4,543,399; 4,882,400; 5,352,749; 5,541,270; EP-A-0 802 202 and Belgian Patent No. 839,380. These patents disclose gas phase polymerization processes wherein the polymerization medium is either mechanically agitated or fluidized by the continuous flow of the gaseous monomer and diluent. As described above, the method and manner for measuring and controlling static charge levels may depend upon the type of reactor system employed.

Other gas phase processes contemplated include series or multistage polymerization processes. See U.S. Patent Nos. 5,627,242, 5,665,818 and 5,677,375, and European publications EP-A-0 794 200 EP-B1-0 649 992, EP-A-0 802 202 and EP-B-634 421.

In general, the polymerization process of the present invention may be a continuous gas phase process, such as a fluid bed process. A fluid bed reactor for use in the process of the present invention typically has a reaction zone and a so-called velocity reduction zone (disengagement zone). The reaction zone includes a bed of growing polymer particles, formed polymer particles and a minor amount of catalyst particles fluidized by the continuous flow of the gaseous monomer and diluent to remove heat of polymerization through the reaction zone. Optionally, some of the recirculated gases may be cooled and compressed to form liquids that increase the heat removal capacity of the circulating gas stream when readmitted to the reaction zone. A suitable rate of gas flow may be readily determined by simple experiment. Makeup of gaseous monomer to the circulating gas stream is at a rate equal to the rate at which particulate polymer product and monomer associated therewith is withdrawn from the reactor, and the composition of the gas passing through the reactor is adjusted to maintain an essentially steady state gaseous composition within the reaction zone. The gas leaving the reaction zone is passed to the velocity reduction zone where entrained particles are removed. Finer entrained particles and dust may be removed in a cyclone and/or fine filter. The gas is passed through a heat exchanger wherein the heat of polymerization is removed, compressed in a compressor and then returned to the reaction zone.

The process described herein is suitable for the production of homopolymers of olefins, including ethylene, and/or copolymers, terpolymers, of olefins, including polymers comprising ethylene and at least one or more other olefins. The olefins may be alpha-olefins. The olefins, for example, may contain from 2 to 16 carbon atoms in one embodiment. In other embodiments, ethylene and a comonomer comprising from 3 to 12 carbon atoms, or from 4 to 10 carbon atoms, or from 4 to 8 carbon atoms, may be used.

In embodiments, polyethylenes may be prepared by the process of the present invention. Such polyethylenes may include homopolymers of ethylene and interpolymers of ethylene and at least one alpha-olefin wherein the ethylene content is at least 50% by weight of the total monomers involved. Olefins that may be used herein include ethylene, propylene, 1-butene, 1-pentene, 1-hexene, 1-heptene, 1-octene, 4-methylpent-1-ene, 1-decene, 1-dodecene and 1-hexadecene. Also usable are polyenes such as 1,3-hexadiene, 1,4-hexadiene, cyclopentadiene, dicyclopentadiene, 4-vinylcyclohex-1-ene, 1,5-cyclooctadiene, 5-vinylidene-2-norbornene and 5-vinyl-2-norbornene, and olefins formed in situ in the polymerization medium. When olefins are formed in situ in the polymerization medium, the formation of polyolefins containing long chain branching may occur.

Other monomers useful in the process described herein include ethylenically unsaturated monomers, diolefins having 4 to 18 carbon atoms, conjugated or non-conjugated dienes, polyenes, vinyl monomers and cyclic olefins. Non-limiting monomers useful in the invention may include norbornene, norbornadiene, isobutylene, isoprene, vinylbenzocyclobutane, styrenes, alkyl substituted styrene, ethylidene norbornene, dicyclopentadiene and cyclopentene. In another embodiment of the process described herein, ethylene or propylene may be polymerized with at least two different comonomers, optionally one of which may be a diene, to form a terpolymer.

In one embodiment, the content of the alpha-olefin incorporated into the copolymer may be no greater than 30 mol % in total; from 3 to 20 mol % in other embodiments. The term "polyethylene" when used herein is used generically to refer to any or all of the polymers comprising ethylene described above.

In other embodiments, propylene-based polymers may be prepared by processes disclosed herein. Such propylene-based polymers may include homopolymers of propylene and interpolymers of propylene and at least one alpha-olefin wherein the propylene content is at least 50% by weight of the total monomers involved. Comonomers that may be used may include ethylene, 1-utene, 1-pentene, 1-hexene, 1-heptene, 1-octene, 4-methylpentene-1, 1-decene, 1-dodecene, and 1-hexadecene. Also usable are polyenes such as 1,3-hexadiene, 1,4-hexadiene, cyclopentadiene, dicyclopentadiene, 4-vinylcyclohexene-1, 1,5-cyclooctadiene, 5-vinylidene-2-norbornene and 5-vinyl-2-norbornene, and olefins formed in situ in the polymerization medium. When olefins are formed *in situ* in the polymerization medium, the formation of polyolefins containing long chain branching may occur. In one embodiment, the content of the alpha-olefin comonomer incorporated into a propylene-based polymer may be no greater than 49 mol % in total, from 3 to 35 mol % in other embodiments.

Hydrogen gas is often used in olefin polymerization to control the final properties of the polyolefin. Using Increasing the concentration (partial pressure) of hydrogen may increase the melt flow index (MFI) and/or melt index (MI) of the polyolefin generated. The MFI or MI can thus be influenced by the hydrogen concentration. The amount of hydrogen in the polymerization can be expressed as a mole ratio relative to the total polymerizable monomer, for example, ethylene, or a blend of ethylene and hexene or propylene. The amount of hydrogen used in the polymerization processes of the present invention is an amount necessary to achieve the desired MFI or MI of the final polyolefin resin. Melt flow rate for polypropylene may be measured according to ASTM D 1238 (230°C with 2.16 kg weight); melt index (I₂) for polyethylene may be measured according to ASTM D 1238 (190°C with 2.16 kg weight), for example.

Further, a staged reactor employing two or more reactors in series may be used, wherein one reactor may produce, for example, a high molecular weight component and another reactor may produce a low molecular weight component. In one embodiment of the invention, the polyolefin is produced using a staged gas phase reactor. Such commercial polymerization systems are described in, for example, 2 METALLOCENE-BASED POLYOLEFINS 366-378 (John Scheirs & W. Kaminsky, eds. John Wiley & Sons, Ltd. 2000); U.S. Patent No. 5,665,818, U.S. Patent No. 5,677,375, and EP-A-0 794 200.

In one embodiment, the one or more reactors in a gas phase or fluidized bed polymerization process may have a pressure ranging from 0.7 to 70 bar 10 to 1000 psia), or from 14 to 42 bar (200 to 600 psia). In one embodiment, the one or more reactors may have a temperature ranging from 10°C, to 150°C, or from 40°C to 125°C. In one embodiment, the reactor temperature may be operated at the highest feasible temperature taking into account the sintering temperature of the polymer within the reactor. In one embodiment, the superficial gas velocity in the one or more reactors may range from 0.2 to 1.1 meters/second (0.7 to 3.5 feet/second), or from 0.3 to 0.8 meters/second (1.0 to 2.7 feet/second).

In one embodiment, the polymerization process is a continuous gas phase process that includes the steps of: (a) introducing a recycle stream (including ethylene and alpha olefin monomers) into the reactor; (b) introducing the supported catalyst system; (c) withdrawing the recycle stream from the reactor; (d) cooling the recycle stream; (e) introducing into the reactor additional monomer(s) to replace the monomer(s) polymerized; (f) reintroducing the recycle stream or a portion thereof into the reactor; and (g) withdrawing a polymer product from the reactor.

In embodiments, one or more olefins, C₂ to C₃₀ olefins or alpha-olefins, including ethylene or propylene or combinations thereof, may be prepolymerized in the presence of the metallocene catalyst systems described above prior to the main polymerization. The prepolymerization may be carried out batch-wise or continuously in gas, solution or slurry phase, including at elevated pressures. The prepolymerization can take place with any olefin monomer or combination and/or in the presence of any molecular weight controlling agent such as hydrogen. For examples of prepolymerization procedures, see U.S. Patent Nos. 4,748,221, 4,789,359, 4,923,833, 4,921,825, 5,283,278 and 5,705,578 and European publication EP-B-0279 863 and WO 97/44371.

The present invention is not limited to any specific type of fluidized or gas phase polymerization reaction and can be carried out in a single reactor or multiple reactors such as two or more reactors in series. In embodiments, the present invention may be carried out in fluidized bed polymerizations (that may be mechanically stirred and/or gas fluidized), or with those utilizing a gas phase, similar to that as described above. In addition to well-known conventional gas phase polymerization processes, it is within the scope of the present invention that "condensing mode," including the "induced condensing mode" and "liquid monomer" operation of a gas phase polymerization may be used.

Embodiments may employ a condensing mode polymerization, such as those disclosed in U.S. Patent Nos. 4,543,399; 4,588,790; 4,994,534; 5,352,749; 5,462,999; and 6,489,408. Condensing mode processes may be used to achieve higher cooling capacities and, hence, higher reactor productivity. In addition to condensable fluids of the polymerization process itself, other condensable fluids inert to the polymerization may be introduced to induce a condensing mode operation, such as by the processes described in U.S. Patent No. 5,436,304.

Other embodiments may also use a liquid monomer polymerization mode such as those disclosed in U.S. Patent No. 5,453,471; U.S. Ser. No. 08/510,375; PCT 95/09826 (US) and PCT 95/09827 (US). When operating in the liquid monomer mode, liquid can be present throughout the entire polymer bed provided that the liquid monomer present in the bed is adsorbed on or in solid particulate matter present in the bed, such as polymer being produced or inert particulate material (e.g., carbon black, silica, clay, talc, and mixtures thereof), so long as there is no substantial amount of free liquid monomer present. Operating in a liquid monomer mode may also make it possible to produce polymers in a gas phase reactor using monomers having condensation temperatures much higher than the temperatures at which conventional polyolefins are produced.

Any type of polymerization catalyst may be used, including liquid-form catalysts, solid catalysts, and heterogeneous or supported catalysts, among others, and may be fed to the reactor as a liquid, slurry (liquid/solid mixture), or as a solid (typically gas transported). Liquid-form catalysts useful in embodiments disclosed herein should be stable and sprayable or atomizable. These catalysts may be used alone or in various combinations or mixtures. For example, one or more liquid catalysts, one or more solid catalysts, one or more supported catalysts, or a mixture of a liquid catalyst and/or a solid or supported catalyst, or a mixture of solid and supported catalysts may be used. These catalysts may be used with co-catalysts, activators, and/or promoters well known in the art. Examples of suitable catalysts include:
A. Ziegler-Natta catalysts, including titanium based catalysts, such as those described in U.S. Patent Nos. 4,376,062 and 4,379,758. Ziegler-Natta catalysts are well known in the art, and typically are magnesium/titanium/electron donor complexes used in conjunction with an organoaluminum co-catalyst.
B. Chromium based catalysts, such as those described in U.S. Patent Nos. 3,709,853; 3,709,954; and 4,077,904.
C. Vanadium based catalysts, such as vanadium oxychloride and vanadium acetylacetonate, such as described in U.S. Patent No. 5,317,036.
D. Metallocene catalysts, such as those described in U.S. Patent Nos. 6,933,258 and 6,894,131.
E. Cationic forms of metal halides, such as aluminum trihalides.
F. Cobalt catalysts and mixtures thereof, such as those described in U.S. Patent Nos. 4,472,559 and 4,182,814.
G. Nickel catalysts and mixtures thereof, such as those described in U.S. Patent Nos. 4,155,880 and 4,102,817.
H. Rare Earth metal catalysts, i.e., those containing a metal having an atomic number in the Periodic Table of 57 to 103, such as compounds of cerium, lanthanum, praseodymium, gadolinium and neodymium. Especially useful are carboxylates, alcoholates, acetylacetonates, halides (including ether and alcohol complexes of neodymium trichloride), and allyl derivatives of such metals. In various embodiments, neodymium compounds, particularly neodymium neodecanoate, octanoate, and versatate, are particularly useful rare earth metal catalysts. Rare earth catalysts may be used, for example, to polymerize butadiene or isoprene.
I. Any combination of one or more of the catalysts of the above.

The described catalyst compounds, activators and/or catalyst systems, as noted above, may also be combined with one or more support materials or carriers. For example, in some embodiments, the activator is contacted with a support to form a supported activator wherein the activator is deposited on, contacted with, vaporized with, bonded to, or incorporated within, adsorbed or absorbed in, or on, a support or carrier.

Support materials may include inorganic or organic support materials, such as a porous support material. Non-limiting examples of inorganic support materials include inorganic oxides and inorganic chlorides. Other carriers include resinous support materials such as polystyrene, functionalized or crosslinked organic supports, such as polystyrene divinyl benzene, polyolefins or polymeric compounds, or any other organic or inorganic support material, or mixtures thereof.

The support materials may include inorganic oxides including Group 2, 3, 4, 5, 13 or 14 metal oxides, such as silica, fumed silica, alumina, silica-alumina and mixtures thereof. Other useful supports include magnesia, titania, zirconia, magnesium chloride, montmorillonite, phyllosilicate, zeolite, talc, or clays. Also, combinations of these support materials may be used, for example, silica-chromium, silica-alumina, or silica-titania. Additional support materials may include those porous acrylic polymers described in EP 0 767 184. Other support materials include nanocomposites, as described in PCT WO 99/47598, aerogels, as described in WO 99/48605, spherulites, as described in U.S. Patent No. 5,972,510, and polymeric beads, as described in WO 99/50311.

Support material, such as inorganic oxides, may have a surface area in the range from 10 to 700 m²/g, a pore volume in the range from 0.1 to 4 cc/g, and an average particle size in the range from 0.1 to 1000 µm. In other embodiments, the surface area of the support may be in the range from 50 to 500 m²/g, the pore volume is from 0.5 to 3.5 cc/g, and the average particle size is from 1 to 500 µm In yet other embodiments, the surface area of the support is in the range from 100 to 1000 m²/g, the pore volume is from 0.8 to 5.0 cc/g, and the average particle size is from 1 to 100 µm, or from 1 to 60 µm. The average pore size of the support material may be in the range from (10 to to 1000 Å) or from (50 to 500Å); or from (75 to 450 Å.)

There are various methods known in the art for producing a supported activator or combining an activator with a support material. In an embodiment, the support material is chemically treated and/or dehydrated prior to combining with the catalyst compound, activator and/or catalyst system. In a family of embodiments, the support material may have various levels of dehydration, such as may be achieved by drying the support material at temperatures in the range from about 100°C to 1000°C.

In some embodiments, dehydrated silica may be contacted with an organoaluminum or alumoxane compound. In specifically the embodiment wherein an organoaluminum compound is used, the activator is formed *in situ* in the support material as a result of the reaction of, for example, trimethylaluminum and water.

In yet other embodiments, Lewis base-containing support substrates will react with a Lewis acidic activator to form a support bonded Lewis acid compound. The Lewis base hydroxyl groups of silica are exemplary of metal/metalloid oxides where this method of bonding to a support occurs. These embodiments are described in, for example, U.S. Patent No. 6,147,173.

Other embodiments of supporting an activator are described in U.S. Patent No. 5,427,991, where supported non-coordinating anions derived from trisperfluorophenyl boron are described; U.S. Patent No. 5,643,847, discusses the reaction of Group 13 Lewis acid compounds with metal oxides such as silica and illustrates the reaction of trisperfluorophenyl boron with silanol groups (the hydroxyl groups of silicon) resulting in bound anions capable of protonating transition metal organometallic catalyst compounds to form catalytically active cations counterbalanced by the bound anions; immobilized Group IIIA Lewis acid catalysts suitable for carbocationic polymerizations are described in U.S. Patent No. 5,288,677; and James C. W. Chien, Jour. Poly. Sci.: Pt A: Poly. Chem, Vol. 29, 1603-1607 (1991), describes the olefin polymerization utility of methylalumoxane (MAO) reacted with silica (SiO₂) and metallocenes and describes a covalent bonding of the aluminum atom to the silica through an oxygen atom in the surface hydroxyl groups of the silica.

In some embodiments, the supported activator is formed by preparing, in an agitated, temperature and pressure controlled vessel, a solution of the activator and a suitable solvent, then adding the support material at temperatures from 0°C to 100°C, contacting the support with the activator solution, then using a combination of heat and pressure to remove the solvent to produce a free flowing powder. Temperatures can range from 40 to 120°C and pressures from 34.5 to 138kPa (5 psia to 20 psia). An inert gas sweep can also be used in assist in removing solvent. Alternate orders of addition, such as slurrying the support material in an appropriate solvent then adding the activator, can be used.

In an embodiment, the weight percent of the activator to the support material is in the range from 10 weight percent to 70 weight percent, or in the range from 15 weight percent to 60 weight percent, or in the range from 20 weight percent to 50 weight percent, or in the range from 20 weight percent to 40 weight percent.

Conventional supported catalysts system useful in embodiments disclosed herein include those supported catalyst systems that are formed by contacting a support material, an activator and a catalyst compound in various ways under a variety of conditions outside of a catalyst feeder apparatus. Examples of conventional methods of supporting metallocene catalyst systems are described in U.S. Patent Nos. 4,701,432, 4,808,561, 4,912,075, 4,925,821, 4,937,217, 5,008,228, 5,238,892, 5,240,894, 5,332,706, 5,346,925, 5,422,325, 5,466,649, 5,466,766, 5,468,702, 5,529,965, 5,554,704, 5,629,253, 5,639,835, 5,625,015, 5,643,847, 5,665,665, z,6_98,487, 5,714,424, 5,723,400, 5,723,402, 5,731,261, 5,759,940, 5,767,032, 5,770,664. 5,846,895, 5,939,348, 546,872, 6,090,740 and PCT publications WO 95/32995, WO 95/14044, WO 96/06187 and WO 97/02297, and EP-B1-0 685 494.

The catalyst components, for example a catalyst compound, activator and support, may be fed into the polymerization reactor as a mineral oil slurry. Solids concentrations in oil may range from 1 to 50 weight percent, or from 10 to 25 weight percent.

The catalyst compounds, activators and or optional supports used herein may also be spray dried separately or together prior to being injected into the reactor. The spray dried catalyst may be used as a powder or solid or may be placed in a diluent and slurried into the reactor. In other embodiments, the catalyst compounds and activators used herein are not supported.

Catalysts useful in various embodiments disclosed herein may include conventional Ziegler-Natta catalysts and chromium catalysts. Illustrative Ziegler-Natta catalyst compounds are disclosed in ZIEGLER CATALYSTS 363-386 (G. Fink, R. Mulhaupt and H. H. Brintzinger, eds., Springer-Verlag 1995); or in EP 103 120; EP 102 503; EP 0 231 102; EP 0 703 246; RE 33,683; U.S. Pat. Nos. 4,302,565; 5,518,973;5,525,678; 5,288,933; 5,290,745; 5,093,415 and 6,562,905. Examples of such catalysts include those having Group 4, 5 or 6 transition metal oxides, alkoxides and halides, or oxides, alkoxides and halide compounds of titanium, zirconium or vanadium; optionally in combination with a magnesium compound, internal and/or external electron donors (alcohols, ethers, siloxanes,), aluminum or boron alkyl and alkyl halides, and inorganic oxide supports.

In one or more embodiments, conventional-type transition metal catalysts can be used. Conventional type transition metal catalysts include traditional Ziegler-Natta catalysts in U.S. Pat. Nos. 4,115,639, 4,077,904, 4,482,687, 4,564,605, 4,721,763, 4,879,359 and 4,960,741. Conventional-type transition metal catalysts can be represented by the formula: MRₓ, where M is a metal from Groups 3 to 17, or a metal from Groups 4 to 6, or a metal from Group 4, or titanium; R is a halogen or a hydrocarbyloxy group; and x is the valence of the metal M. Examples of R include alkoxy, phenoxy, bromide, chloride and fluoride. Preferred conventional-type transition metal catalyst compounds include transition metal compounds from Groups 3 to 17, or Groups 4 to 12, or Groups 4 to 6.

Conventional-type transition metal catalyst compounds based on magnesium/titanium electron-donor complexes are described in, for example, U.S. Pat. Nos. 4,302,565 and 4,302,566. Catalysts derived from Mg/Ti/Cl/THF are also contemplated, which are well known to those of ordinary skill in the art.

Suitable chromium catalysts include di-substituted chromates, such as CrO₂(OR)₂; where R is triphenylsilane or a tertiary polyalicyclic alkyl. The chromium catalyst system can further include CrO₃, chromocene, silyl chromate, chromyl chloride (CrO₂Cl₂), chromium-2-ethyl-hexanoate or chromium acetylacetonate (Cr(AcAc).sub.3), Illustrative chromium catalysts are further described in U.S. Pat. Nos. 3,709,853; 3,709,954; 3,231,550; 3,242,099; and 4,077,904.

Metallocenes are generally described throughout in, for example, 1 & 2 METALLOCENE-BASED POLYOLEFINS (John Scheirs & W. Kaminsky eds., John Wiley & Sons, Ltd. 2000); G. G. Hlatky in 181 COORDINATION CHEM. REV. 243-296 (1999) and in particular, for use in the synthesis of polyethylene in 1 METALLOCENE-BASED POLYOLEFINS 261-377 (2000). The metallocene catalyst compounds can include "half sandwich" and "full sandwich" compounds having one or more Cp ligands (cyclopentadienyl and ligands isolobal to cyclopentadienyl) bound to at least one Group 3 to Group 12 metal atom, and one or more leaving group(s) bound to the at least one metal atom. Hereinafter, these compounds will be referred to as "metallocenes" or "metallocene catalyst components."

The Cp ligands are one or more rings or ring system(s), at least a portion of which includes p.-bonded systems, such as cycloalkadienyl ligands and heterocyclic analogues. The ring(s) or ring system(s) typically include atoms selected from Groups 13 to 16 atoms, or the atoms that make up the Cp ligands can be selected from carbon, nitrogen, oxygen, silicon, sulfur, phosphorous, germanium, boron and aluminum and combinations thereof, wherein carbon makes up at least 50% of the ring members. Or, the Cp ligand(s) can be selected from substituted and unsubstituted cyclopentadienyl ligands and ligands isolobal to cyclopentadienyl, non-limiting examples of which include cyclopentadienyl, indenyl, fluorenyl and other structures. Further non-limiting examples of such ligands include cyclopentadienyl, cyclopentaphenanthreneyl, indenyl, benzindenyl, fluorenyl, octahydrofluorenyl, cyclooctatetraenyl, cyclopentacyclododecene, phenanthrindenyl, 3,4-benzofluorenyl, 9-phenylfluorenyl, 8-H-cyclopent[a]acenaphthylenyl, 7H-dibenzofluorenyl, indeno[1,2-9]anthrene, thiophenoindenyl, thiophenofluorenyl, hydrogenated versions thereof (e.g., 4,5,6,7-tetrahydroindenyl, or "H₄Ind"), substituted versions thereof, and heterocyclic versions thereof.

In one or more embodiments, a "mixed" catalyst system or "multi-catalyst" system may be used. A mixed catalyst system includes at lea^{st} one meta^{ll} ocene catalys^{t} component and at least one non-metallocene component. The mixed catalyst system may be described as a bimetallic catalyst composition or a multi-catalyst composition. As used herein, the terms "bimetallic catalyst composition" and "bimetallic catalyst" include any composition, mixture, or system that includes two or more different catalyst components, each having the same or different metal group but having at least one different catalyst component, for example, a different ligand or general catalyst structure. Examples of useful bimetallic catalysts can be found in U.S. Patent Nos. 6,271,325, 6,300,438, and 6,417,304. The terms "multi-catalyst composition" and "multi-catalyst" include any composition, mixture, or system that includes two or more different catalyst components regardless of the metals. Therefore, terms "bimetallic catalyst composition," "bimetallic catalyst," "multi-catalyst composition," and "multi-catalyst" will be collectively referred to herein as a "mixed catalyst system" unless specifically noted otherwise. Any one or more of the different catalyst components can be supported or non-supported.

Processes disclosed herein may optionally use inert particulate materials as fluidization aids. These inert particulate materials can include carbon black, silica, talc, and clays, as well as inert polymeric materials. Carbon black, for example, has a primary particle size of 10 to 100 nanometers, an average size of aggregate of 0.1 to 30 µm (microns), and a specific surface area from 30 to 1500 m²/g. Silica has a primary particle size of 5 to 50 nanometers, an average size of aggregate of 0.1 to 30µm (microns), and a specifi^{c} surface area from 50 to 500 m²/g. Clay, talc, and polymeric materials have an average particle size of 0.01 to 10 µm (microns) and a specific surface area of 3 to 30 m²/g. These inert particulate materials may be used in amounts ranging from 0.3 to 80%, or from 5 to 50%, based on the weight of the final product. They are especially useful for the polymerization of sticky polymers as disclosed in U.S. Patent Nos. 4,994,534 and 5,304,588.

Chain transfer agents, promoters, scavenging agents and other additives may be, and often are, used in the polymerization processes disclosed herein. Chain transfer agents are often used to control polymer molecular weight. Examples of these compounds are hydrogen and metal alkyls of the general formula M^{x}R_{y}, where M is a Group 3-12 metal, x is the oxidation state of the metal, typically 1, 2, 3, 4, 5 or 6, each R is independently an alkyl or aryl, and y is 0, 1, 2, 3, 4, 5, or 6. In some embodiments, a zinc alkyl is used, such as diethyl zinc. Typical promoters may include halogenated hydrocarbons such as CHCl₃, CFCl₃, CH₃-CCl₃, CF₂Cl-CCl₃, and ethyltrichloroacetate. Such promoters are well known to those skilled in the art and are disclosed in, for example, U.S. Patent No. 4,988,783. Other organometallic compounds such as scavenging agents for poisons may also be used to increase catalyst activity. Examples of these compounds include metal alkyls, such as aluminum alkyls, for example, triisobutylaluminum. Some compounds may be used to neutralize static in the fluidized-bed reactor, others known as drivers rather than antistatic agents, may consistently force the static from positive to negative or from negative to positive. The use of these additives is well within the skill of those skilled in the art. These additives may be added to the circulation loops, riser, and/or downer separately or independently from the liquid catalyst if they are solids, or as part of the catalyst provided they do not interfere with the desired atomization. To be part of the catalyst solution, the additives should be liquids or capable of being dissolved in the catalyst solution.

In one embodiment of the process of the invention, the gas phase process may be operated in the presence of a metallocene-type catalyst system and in the absence of, or essentially free of, any scavengers, such as triethylaluminum, trimethylaluminum, triisobutylaluminum and tri-n-hexylaluminum and diethyl aluminum chloride or dibutyl zinc. By "essentially free," it is meant that these compounds are not deliberately added to the reactor or any reactor components, and if present, are present in the reactor at less than 1 ppm.

In some embodiments, one or more olefins, including ethylene or propylene or combinations thereof, may be prepolymerized in the presence of the catalyst systems described above prior to the main polymerization within the reactors described herein. The prepolymerization may be carried out batch-wise or continuously in gas, solution, or slurry phase, including at elevated pressures. The prepolymerization can take place with any olefin monomer or combination and/or in the presence of any molecular weight controlling agent such as hydrogen. For examples of prepolymerization procedures, see U.S. Patent Nos. 4,748,221, 4,789,359, 4,923,833, 4,921,825, 5,283,278 and 5,705,578 and European publication EP-B-0279 863 and WO 97/44371.

In a family of embodiments, the reactors disclosed herein are capable of producing greater than 227kg/hr (500 lbs) of polymer per hour to 136,000kg/hr(300,000 lbs/hr) or higher of polymer, preferably greater than 455kg/hr (1000 Ibs/hr) more preferably greater than 4540kg/hr (10,000 Ibs/hr) even more preferably greater than 11,300kg/hr(25,000 lbs/hr) still more preferably greater than 15,900kg/hr(35,000 lbs/hr) still even more preferably greater than 22, 700kg/hr (50,000 lbs/hr) and most preferably greater than 29,000kg/hr(65,000 lbs/hr) to greater than 68,100kg/hr(150,000 lbs/hr).

The polymers produced by the processes described herein can be used in a wide variety of products and end-use applications. The polymers produced may include linear low density polyethylene, elastomers, plastomers, high density polyethylenes, medium density polyethylenes, low density polyethylenes, polypropylene homopolymers and polypropylene copolymers, including random copolymers and impact copolymers.

The polymers, typically ethylene based polymers, have a density in the range of from 0.86 g/cc to 0.97 g/cc, preferably in the range of from 0.88 g/cc to 0.965 g/cc, and more preferably in the range of from 0.900 g/cc to 0.96 g/cc. Density is measured in accordance with ASTM-D-1238.

In yet another embodiment, propylene based polymers are produced. These polymers include atactic polypropylene, isotactic polypropylene, hemi-isotactic and syndiotactic polypropylene. Other propylene polymers include propylene block, random, or impact copolymers. Propylene polymers of these types are well known in the art, see for example U.S. Patent Nos. 4,794,096, 3,248,455, 4,376,851, 5,036,034 and 5,459,117.

The polymers may be blended and/or coextruded with any other polymer. Non-limiting examples of other polymers include linear low density polyethylenes produced via conventional Ziegler-Natta and/or bulky ligand metallocene catalysis, elastomers, plastomers, high pressure low density polyethylene, high density polyethylenes or polypropylenes,

Polymers produced by the processes disclosed herein and blends thereof are useful in such forming operations as film, sheet, and fiber extrusion and co-extrusion as well as blow molding, injection molding and rotary molding. Films include blown or cast films formed by co-extrusion or by lamination useful as shrink film, cling film, stretch film, sealing films, oriented films, snack packaging, heavy duty bags, grocery sacks, baked and frozen food packaging, medical packaging, industrial liners, membranes, in food-contact and non-food contact applications.

### Condensed Mode of Operation

Embodiments of the processes disclosed herein may also be operated in a condensing mode, similar to those disclosed in U.S. Patent Nos. 4,543,399, 4,588,790, 4,994,534, 5,352,749, 5,462.999, and 6,489,408, and U.S. Patent Application Publication No. 20050137364. Condensing mode processes may be used to achieve higher cooling capacities and, hence, higher reactor productivity. In addition to condensable fluids of the polymerization process itself, including monomer(s) and co-monomer(s), other condensable fluids inert to the polymerization may be introduced to induce a condensing mode operation, such as by the processes described in U.S. Patent No. 5,436,304.

The condensing mode of operation in polymerization reactors may significantly increase the production rate or space time yield by providing extra heat-removal capacity through the evaporation of condensates in the cycle gas. Additional condensation is often promoted to extend the utility of condensed mode operation by adding an induced condensing agent ("ICA") into the reactor.

The amount of condensation of liquid in the circulating components can be maintained at up to 90 percent by weight, for example. This degree of condensation is achieved by maintaining the outlet temperature from the heat exchange so as to achieve the required degree of cooling below the dew point of the mixture.

In general, it would be desirable to have a high proportion of the induced condensing agent in the gaseous stream, to enhance the heat-removal from the reactor. Within the polymer particles, there is dissolved ICA, comonomer(s), other hydrocarbon(s), and even monomer(s), with quantities depending on the types those species and the gas composition. Usually the amount of ICA in the circulating stream is one of the most important factors that affect the overall quantity of the dissolved species in the polymer. At certain levels of ICA, an excess amount of the ICA is dissolved into the polymer particles, making the polymer sticky. Therefore, the amount of the ICA that can be introduced into the reactor must be kept below the "stickiness limit" beyond which the circulating material becomes too sticky to discharge or to maintain the desired fluidization state. Each ICA has a different solubility in each specific polymer product, and in general, it is desirable to utilize an ICA having relatively low solubility in the produced polymer, so that more of the ICA can be utilized in the gaseous stream before reaching the stickiness limit. For certain polymer products and certain ICAs, such a "stickiness limit" may not exist at all.

Suitable ICAs are materials having a low normal boiling point and/or a low solubility in polymers. For example, suitable ICAs may have a normal boiling point less than 25°C; or less than 20°C; or less than 15°C; or less than 10° C; or less than 0°C in some embodiments.

Suitable ICAs include those having a "typical solubility"' less than 1.5 kg ICA per 100 kg of polyethylene in a reactor. In some embodiments, suitable ICAs include those having a typical solubility less than 1.25 kg ICA per 100 kg of polyethylene; or less than 1.0 kg ICA per 100 kg of polyethylene; or less than 0.8 kg ICA per 100 kg of polyethylene; or less than 0.5 kg ICA per 100 kg of polyethylene; or less than 0.3 kg ICA per 100 kg of polyethylene in other embodiments. "Typical solubility" is determined under 90°C reactor temperature and ICA partial pressure of 1.72x10⁵Pa (25 psi), for polyethylene with a melt index (I₂) = 1.0 dg/min and resin density = 918 kg/m³. In these embodiments, the melt index is determined using ASTM D1238.

In some embodiments, suitable ICAs include cyclobutane, neopentane, n-butane, isobutane, cyclopropane, propane, and mixtures thereof. It is recognized within the scope of embodiments disclosed herein that relatively volatile solvents such as propane, butane, isobutane or even isopentane can be matched against a heavier solvent or condensing agent such as isopentane, hexane, hexene, or heptane so that the volatility of the solvent is not so appreciably diminished in the circulation loops. Conversely, heavier solvents may also be used either to increase resin agglomeration or to control resin particle size.

### Measurement and Control of Static

The entrainment zone is defined as any area in a reactor system above or below the dense phase zone of the reactor system. Fluidization vessels with a bubbling bed comprise two zones, a dense bubbling phase with an upper surface separating it from a lean or dispersed phase. The portion of the vessel between the (upper) surface of the dense bed and the exiting gas stream (to the recycle system) is called "freeboard." Therefore, the entrainment zone comprises the freeboard, the cycle (recycle) gas system (including piping and compressors/coolers) and the bottom of the reactor up to the top of the distributor plate. Electrostatic activity measured anywhere in the entrainment zone is termed herein "carryover static,'' and as such, is differentiated from the electrostatic activity measured by a conventional static probe or probes in the fluid bed.

The electrostatic activity (carryover or entrainment static) measured above the "at or near zero" level (as defined herein) on the carryover particles in the entrainment zone may correlate with sheeting, chunking or the onset of same in a polymer reaction system and may be a more reliable indicator of sheeting or a discontinuity event than electrostatic activity measured by one or more "conventional" static probes. In addition, monitoring electrostatic activity of the carryover particles in the entrainment zone may provide reactor parameters by which the amount of polyethyleneimine additive and additional continuity additive, if used, can be dynamically adjusted and an optimum level obtained to reduce or eliminate the discontinuity event.

If the level of electrostatic activity in the entrainment zone increases in magnitude during the course of the reaction, the amount of polyethyleneimine additive in the reactor system may be adjusted accordingly as described further herein.

### Static Probes

The static probes described herein as being in the entrainment zone include one or more of: at least one recycle line probe; at least one annular disk probe; at least one distributor plate static probe; or at least one upper reactor static probe, this latter will be outside or above the 1/4 to 3/4 reactor diameter height above the distributor plate of the conventional probe or probes. These probes may be used to determine entrainment static either individually or with one or more additional probes from each group mentioned above. The type and location of the static probes may be, for example, as described in U.S. Patent Application Publication No. 20050148742.

Typical current levels measured with the conventional reactor probes range from +0.1-10, or ±0.1-8, or ±0.1-6, or ±0.1-4, or ±0.1-2 nanoamps/cm². As with all current measurements discussed herein, these values will generally be averages over time periods, also these may represent root mean squared values (RMS), in which case they would all be positive values. However, most often, in reactors utilizing metallocene catalysts, the conventional reactor probes will register at or near zero during the beginning of or middle of a sheeting incident. By at or near zero, it is intended for either the conventional static reactor probe as well as the probes in the entrainment zone, to be a value of ≤±0.5, or ≤±0.3, or ≤±0.1, or ≤±0.05, or ≤±0.03, or ≤±0.01, or ≤±0.001 or 0 nanoamps/cm². For example, a measured value of -0.4 would be "less than" "±0.5," as would a measured value of +0.4. When static is measured with a voltage probe, typical voltage levels measured may range from ±0.1-15,000, or ±0.1-10,000 volts. Use of polyethyleneimine additives according to embodiments disclosed herein may result in measured voltage values of≤±500, or ≤±200, or ≤±150, or ≤±100, or ≤±50, or ≤±25 volts.

The conventional static probe may register at or near zero static or current (as defined herein), while at least one other static probe in at least one location in the entrainment zone, may register static activity or current higher than that measured by the conventional static probe (this latter may most often be at or near zero with metallocene catalyst). In this event, where the difference between the current measured by conventional static probe and the current measured by one or more other (non-conventional static probes) is ≥±0.1, or ≥±0.3, or ≥±0.5 nanoamps/cm², or greater, action will be taken to reduce or eliminate the static charge in being detected at one or more of the entrainment zone probes. Such action may be addition of at least one polyethyleneimine additive according to embodiments disclosed herein (or a net increase in the presence in the reactor of at least one polyethyleneimine additive according to embodiments disclosed herein), or a reduction in the catalyst feed rate, or a reduction in the gas throughput velocity, or combinations thereof. These actions constitute means for maintaining, reducing or eliminating carryover static and reactor static at or near zero.

When one or more of the static probes discussed above begin to register static activity above or below zero, (defined as being respectively above or below "at or near zero") measures should be taken to keep the level low or to return the level of static activity to at or near zero, which we have shown will prevent, reduce or eliminate reactor continuity events. The measures contemplated include addition of one or more polyethyleneimine additives. Such addition may have the effect of raising the level of polyethyleneimine additive in the reactor if a certain level is already present.

The total amount of polyethyleneimine additive or additives and any additional continuity additives or static control agents, if used, present in the reactor will generally not exceed 250 or 200, or 150, or 125 or 100 or 90, or 80, or 70 or 60, or 50, or 40, or 30, or 20 or 10 ppm (parts per million by weight of polymer being produced). The total amount of polyethyleneimine additive and any additional continuity additives or static control agents, if used, will be greater than 0.01, or 1, or 3, or 5, or 7, or 10, or 12, or 14, or 15, or 17, or 20 ppm based on the weight of polymer being produced (usually expressed as pounds or kilograms per unit of time). Any of these lower limits are combinable with any upper limit given above. The polyethyleneimine additive may be added directly to the reactor through a dedicated feed line, and/or added to any convenient feed stream, including the ethylene feed stream, the comonomer feed stream, the catalyst feed line, or the recycle line. If more than one polyethyleneimine additive and additional continuity additive or static control agent is used, each one may be added to the reactor as separate feed streams, or as any combination of separate feed streams or mixtures. The manner in which the polyethyleneimine additives are added to the reactor is not important, so long as the additive(s) are well dispersed within the fluidized bed, and that their feed rates (or concentrations) are regulated in a manner to provide minimum levels of carryover static.

The total amount of additive discussed immediately above may include polyethyleneimine additive from any source, such as that added with the catalyst, added in a dedicated continuity additive line, contained in any recycle material, or combinations thereof. In one embodiment, a portion of the polyethyleneimine additive(s) would be added to the reactor as a preventative measure before any measurable electrostatic activity, in such case, when one or more static probes register static activity above the "at or near zero" level, the polyethyleneimine additive will be increased to return the one or more probes registering static activity, back to at or near zero.

It is also within the scope of embodiments of the present invention to introduce at least one polyethyleneimine additive in the catalyst mixture, inject the catalyst mixture (containing at least one polyethyleneimine additive) into the reactor system, and additionally or alternatively introduce at least one polyethyleneimine additive into the reactor system via a dedicated additive feed line independent of the catalyst mixture, so that a sufficient concentration of the at least one polyethyleneimine additive is introduced into the reactor to prevent or eliminate a reactor discontinuity event Either of these feed schemes or both together may be employed. The polyethyleneimine additive in the catalyst/polyethyleneimine additive mixture and the polyethyleneimine additive added via the separate additive feed line, may be the same or different.

In another embodiment polyethylencimine additives according to embodiments disclosed herein may be added to a non-soluble or anti-solvent component to form a suspension of finely dispersed droplets. These droplets are quite small, in the range of 10 µm (microns) less, are quite stable, and may be maintained in this state by agitation. When added to the reactor, the droplets are thereby well dispersed in a high surface area state and able to coat the vessel walls and polymer particles more effectively. It is also believed that the particles are more highly charged in this state and more effective as a static driver.

Determination of optimal polyethyleneimine additive feed rate to the reactor system is evidenced by a value of the carryover static at or near zero as defined herein. For example, after stabilizing the carryover static reading in the reactor, if additional (i.e. higher) levels of polyethyleneimine additive are added, and if one or more static probes in the entrainment zone of the reactor shows an increase in magnitude of static reading, this is a qualitative indication that the optimum continuity level has been exceeded. In this event, the levels of polyethyleneimine additive should be lowered until stability of the static activity (as indicated by relatively constant readings of static activity in the one or more static probes) is again achieved, or the static activity is lowered to near zero or regains zero. Thus, dynamically adjusting the amount of polyethyleneimine additive to reach an optimum concentration range is desirable and is within the practice of embodiments of the present invention. By optimum concentration we intend herein an effective amount. Therefore, an effective amount of at least one polyethyleneimine additive is that amount that reduces, eliminates or achieves stability in electrostatic charge as measured by one or more static probes. Thus, as noted herein, if too much polyethyleneimine additive is added, electrostatic charge will reappear; such an amount of polyethyleneimine additive will be defined as outside an effective amount.

### EXAMPLES

It is to be understood that while the invention has been described in conjunction with the specific embodiments thereof, the foregoing description is intended to illustrate and not limit the scope of the invention. Other aspects, advantages and modifications will be apparent to those skilled in the art to which the invention pertains.

Therefore, the following examples are put forth so as to provide those skilled in the art with a complete disclosure and description and are not intended to limit the scope of that which the inventors regard as their invention.

Additives used in the following Examples include:
aluminum distearate.
a mixture of aluminum distearate and an ethoxylated amine type compound (IRGASTAT AS-990, available from Huntsman (formerly Ciba Specialty Chemicals), referred to throughout the examples as a continuity additive mixture or CA-mixture.
LUPASOL FG, a low molecular weight (800 Daltons) ethyleneimine copolymer available from BASF.
LUPASOL WF, a medium molecular weight (25000 Daltons) ethyleneimine copolymer available from BASF.

Catalysts used in the following Examples are as follows:
XCAT™ EZ 100 Metallocene Catalyst: a metallocene catalyst available from Univation Technologies LLC, Houston, Texas.
PRODIGY™ BMC-200 Catalyst: a catalyst available from Univation Technologies LLC, Houston, Texas.
PRODIGY™ BMC-300 Catalyst: a catalyst available from Univation Technologies LLC, Houston, Texas.

The polymerization reactions described in the following examples were conducted in a continuous pilot-scale gas phase fluidized bed reactor of 0.35 meters internal diameter and 2.3 meters in bed height. The fluidized bed was made up of polymer granules. The gaseous feed streams of ethylene and hydrogen together with liquid comonomer were introduced below the reactor bed into the recycle gas line. Hexene was used as comonomer. The individual flow rates of ethylene, hydrogen and comonomer were controlled to maintain fixed composition targets. The ethylene concentration was controlled to maintain a constant ethylene partial pressure. The hydrogen was controlled to maintain a constant hydrogen to ethylene mole ratio. The concentrations of all the gases were measured by an on-line gas chromatograph to ensure relatively constant composition in the recycle gas stream.

The solid catalyst XCAT EZ 100 Metallocene Catalyst was injected directly into the fluidized bed using purified nitrogen as a carrier. Its rate was adjusted to maintain a constant production rate. In the case of PRODIGY BMC-200 and BMC-300 Catalysts, the catalyst was injected directly into the reactor as a slurry in purified mineral oil and the rate of the slurry catalyst feed rate was adjusted to maintain a constant production rate of polymer. The reacting bed of growing polymer particles was maintained in a fluidized state by the continuous flow of the make up feed and recycle gas through the reaction zone. A superficial gas velocity of 0.6-0.9 meters/sec was used to achieve this. The reactor was operated at a total pressure of 2240 kPa. The reactor was operated at a constant reaction temperature of 85°C or 100°C depending on desired product.

The fluidized bed was maintained at a constant height by withdrawing a portion of the bed at a rate equal to the rate of formation of particulate product. The rate of product formation (the polymer production rate) was in the range of 15-25 kg/hour. The product was removed semi-continuously via a series of valves into a fixed volume chamber. This product was purged to remove entrained hydrocarbons and treated with a small steam of humidified nitrogen to deactivate any trace quantities of residual catalyst.

### Example 1

A test was carried out in the above mentioned polymerization reactor to evaluate the effect of LUPASOL FG on reactor performance as compared to operation without a continuity additive and to operation with aluminum distearate. The reactor was operated to produce a film product of about 1.4 to 1.8 melt index and 0.925 g/cm³ density at the following reaction conditions using metallocene catalyst (XCAT EZ 100 Metallocene Catalyst): reaction temperature of 85°C, hexene-to-ethylene molar ratio of 0.009 and H2 concentration of 830 ppm. The continuity additive slurry in mineral oil was metered to the reactor at a rate based on polymer production rate. Initially, aluminum distearate as a continuity additive was used. The continuity additive concentration in polymer averaged about 17 ppmw based on polymer production rate. The reactor was then transitioned to operation in steady state without the use of added continuity additive followed by operation with LUPASOL FG as a continuity additive.

For operation with LUPASOL FG, the LUPASOL FG was slurried in mineral oil (7 wt% LUPASOL FG in mineral oil). Initially, the LUPASOL FG in mineral oil slurry was fed to the reactor at a concentration of 3 ppmw based on production rate. A narrowing in static level band was observed followed by a drop in the entrainment static level. The level of the LUPASOL FG was lowered to 1.5 ppm after observing minor skin thermocouple excursions. The reactor lined out smoothly until the end of the run (about four bed turnovers (BTOs)).

Surprisingly, the catalyst productivity was observed to be higher with use of LUPASOL FG as compared to use of aluminum distearate and with no continuity additive, as shown in Table 1 below. There was no discernable change in average particle size (APS) or fines level with LUPASOL FG.

**Table 1 . Effect of LUPASOL FG on Catalyst Productivity**

| Continuity Additive (CA) | Aluminum distearate | None | LUPASOL FG |
|---|---|---|---|
| CA level, ppmw | 17.23 | 0.00 | 1.51 |
| Catalyst Productivity (material balance), gm/gm | 7404 | 7841 | 8318 |

### Example 2

A test was carried out to evaluate LUPASOL FG diluted in toluene (2 wt%) and fed to the reactor as a solution. The test was carried out while running on XCAT EZ 100 Metallocene Catalyst. Initially the reactor was lined out using aluminum distearate as a continuity additive at a feed rate of approximately 20 ppmw based on production rate. A switch was then made to feeding LUPASOL FG at low level of about 4 ppmw and was gradually increased to 50 ppmw.

A 20% increase in catalyst productivity was observed compared to operation with aluminum distearate as shown in Table 2. During operation with LUPASOL FG, the skin thermocouples activity was calm as compared to some slight cold banding with aluminum distearate. A more stable fluidized bulk density signal was also observed.

**Table 2. Effect of Lupasol on XCAT EZ Metallocene Catalyst Activity.**

| | | | | Catalyst Productivity | | | |
|---|---|---|---|---|---|---|---|
| Run Part | Continuity Additive | CA Level (ppmw) | Produciton Rate (kg/m)((lb/h)) | Material Balance (gm/gm) | Zr ICPES | Al ICPES | Run Observations |
| 1 | aluminum distearate | 20 | 31.8 (70) | 4192 | 3629 | 3731 | Light coating on dome |
| 2 | LUPASOL FG | 4.4 | 37.7 (83) | 4994 | 4387 | 4577 | Some chunks |
| 3 | LUPASOL FG | 9.1 | 37.2 (82) | 4958 | | | Light coating on dome |
| 4 | LUPASOL-FG | 53 | 38.6 (85) | 5127 | | | |

### Example 3

A test was carried out where LUPASOL FG slurried in mineral oil was evaluated with PRODIGY BMC-300 Catalyst system. The reactor was initially operated in steady state without feeding any continuity additive to produce a bimodal blow molding type product with 35.8 FI and a density of 0.957 gm/cc at the following reaction conditions: reaction temperature of 85°C, ethylene partial pressure of 1.54 MPa (220 psia) hexene-to-ethylene molar ratio of 0.0015 and H2-to ethylene molar ratio of 0.0015. The reactor was then transitioned to feeding LUPASOL FG slurry to the reactor at a rate of 1.9 ppmw based on polymer production rate for 6 hours. The second part of the test was carried out at a higher level of LUPASOL FG, 14.2 ppmw for 12 hours. In both cases, smooth reactor operation was achieved with negligible effect on static or skin thermocouple activities. There was also negligible effect on catalyst productivity as shown in Table 3 bleow.

**Table 3. Effect of LUPASOL FIG on Slurry PRODIGY BMC-300 Catalyst Activity.**

| | Control | LUPASOL FG | LUPASOL FG |
|---|---|---|---|
| Continuity Additive Level, ppmw | 0 | 1.9 | 14.2 |
| Catalyst Productivity (material valance), gm/gm | 15271 | 15656 | 14763 |
| Corrected Catalyst Productivity (Zr XRF Basis) (gm/gm) | 13697 | 13843 | 13222 |

The PRODIGY BMC-200 Catalyst productivity as measured using Zr XRF is corrected to account for the total amount of catalyst species present in the catalyst, not just those containing Zr.

### Example 4

A test was carried out where LUPASOL FG slurried in mineral oil was evaluated with PRODIGY BMC-200 Catalyst system. In this test, LUPASOL FG was fed as a 2 wt% mixture in mineral oil to the reactor. The reactor was operated in steady state while feeding LUPASOL FG slurry as a continuity additive to produce a bimodal type product with 6 to 7 FI and a density of 0.949 gm/cc at the following reaction conditions: reaction temperature of 100°C, ethylene partial pressure of 1.54MPa (220 psia) hexene-to-ethylene molar ratio of 0.0055 and H2-to ethylene molar ratio of 0.002. LUPASOL FG was fed to the reactor at nominally two concentration levels of 2 ppmw and 10 ppmw based on production rate. No skin thermocouple activity was observed an the upper static probe and the carryover probe signal were similar to baseline (no additive as shown in Example 5 below) conditions. LUPASOL FG appears to have negligible effect on catalyst activity at the levels tested, as shown in Table 4.

### Comparative Example 5

A direct transition from feeding LUPASOL FG as a continuity additive (Example 4) to a continuity additive mixture (CA-mixture) including aluminum distearate and an ethoxylated amine type compound (IRGASTAT AS-990, available from Huntsman (formerly Ciba Specialty Chemicals) was carried out where the CA-mixture co-feed was established at a nominal concentration of 36 ppmw based on production rate. The reaction conditions were similar to those mentioned in Example 4 above. A skin thermocouple signal on the expanded section of the reactor showed some cold banding following CA-mixture feed initiation. Other skin thermocouples located lower in the bed showed no activity. As the operation progressed with the CA-mixture run, the upper and lower static probes began trending negatively to approximately -200V. The catalyst productivity during the CA-mixture co-feed test dropped to about 3493 kg/kg (7700 lb/lb) based on mass balance and 3538 kg/kg (7800 lb/lb) based on Zr XRF, as shown in Table 4. Both bed static and entrainment static were also negatively affected by the CA-mixture in comparison to LUPASOL FG.

**Table 4. Effect of LUPASOL on PRODIGY BMC-200 Catalyst Activity**

| | No Additive | CA-mixture | LUPASOL | |
|---|---|---|---|---|
| Continuity Additive Level, ppmw | 0 | 36 | 2 | 10 |
| Catalyst Productivity (material balance), gm/gm | 10518 | 7700 | 9778 | 10690 |

### Example 6

Another test was carried out in a similar UNIPOL^{™} PE reactor mentioned above where LUPASOL FG slurried in mineral oil was evaluated with PRODIGY BMC-200 Catalyst system as compared to operation without any continuity additive and operation with a continuity additive mixture (CA-mixture) including aluminum distearate and an ethoxylated amine type compound (IRGASTAT AS-990, available from Huntsman (formerly Ciba Specialty Chemicals. In this test, the PRODIGY BMC-200 Catalyst (spray dried) was fed to the reactor as a dry catalyst using purified nitrogen as a carrier. The dry catalyst feed rate was adjusted to maintain a constant production rate in this test.

The reactor was initially operated in steady state while feeding CA-mixture (mentioned above) as a continuity additive to produce a bimodal type product with 0.9 to 1.5 FI and a density of 0.944-0.946 gm/cc at the following reaction conditions: reaction temperature of 85°C, ethylene partial pressure of 1.47 MPa(210 psia), hexene-to-ethylene molar ratio of 0.003 and H2-to-ethylene molar ratio of 0.0019. The CA-mixture feed rate was approximately 26.6 ppmw based on production rate. The reactor was later operated without any continuity additive before the reactor was transitioned to operation with LUPASOL FG as a continuity additive. LUPASOL FG in mineral oil feed was initiated at a rate of 3 ppmw based on production rate. Operation continued to be smooth with no discernable change in skin thermocouple activities.

The effect on catalyst productivity as compared to no additive and CA-mixture are shown in Table 5. LUPASOL FG appeared to show negligible effect on catalyst productivity as compared to no continuity additive. There was no discernable change in average particle size with LUPASOL FG; however, there was a slight reduction in the fines level from about 14% with no additive to about 11.6 % with LUPASOL FG co-feed.

**Table 5. Effect of LUPASOL FG on PRODIGY BMC-200 Catalyst activity vs. CA-mixture**

| Continuity Additive | CA-mixture | None | LUPASOL FG |
|---|---|---|---|
| CA Level (ppmw) | 26.65 | 0 | 2.6 |
| FI (g/10 min) | 1.455 | 1.085 | 0.937 |
| Density (g/cc) | 0.946 | 0.945 | 0.944 |
| Fines Level (wt%) | 9.69 | 14.33 | 11.55 |
| Catalyst Productivity (A1 ICPES basis) (gm/gm) | 5250 | 6097 | 6097 |
| Catalyst Productivity (Zr ICPES basis) (gm/gm) | 5349 | 5897 | 5974 |

### Example 7

The following tests were carried out in a larger sized continuous pilot plant reactor with diameter of 0.57 meters and bed height of 3.8 meters with a production rate of 45.4-68 kg/hr (100-150 lb/hr).

A test was carried out in the above mentioned polymerization reactor to evaluate the effect of LUPASOL WF on reactor performance as compared to operation with Lupasol FG and to operation with aluminum distearate. LUPASOL WF is from the same family of compounds as LUPASOL FG (i.e. polyethyleneimine) except that LUPASOL WF has a much higher MW and viscosity. LUPASOL WF has an average MW of about 25000 and a viscosity of about 200,000 cps. The reactor was operated to produce a film product of about 1.0 melt index and 0.921 density at the following reaction conditions using metallocene catalyst (XCAT EZ 100 Metallocene Catalyst): reaction temperature of 85°C, hexene-to-ethylene molar ratio of 0.0045 and H2 concentration of 826 ppm at an ethylene partial pressure of 1.34 MPa (191 psia) A continuity additive solution in isohexane was metered to the reactor at a rate based on polymer production rate. Initially, aluminum distearate as a continuity additive was used. The continuity additive concentration in polymer averaged about 5.6 ppmw based on polymer production rate. The reactor was then transitioned to operation in steady state with LUPASOL WF as a continuity additive.

For operation with LUPASOL WF, the LUPASOL WF was first prepared as a masterblend in mineral oil as a 7% suspension to make a lower visosity blend that could be added to the slurry mix tank. This was then added together with 1362 g of minearal oil in the slurry mix tank to make a final suppension of in mineral oil (1.4 wt% LUPASOL WF in mineral oil). The LUPASOL WF in mineral oil slurry was fed to the reactor at a concentration of 1.5 ppmw based on production rate. A narrowing in static level bandwidth and a drop in the entrainment static level was observed. The skin thermocouple band also decreased indicating less adhesion of polymer to the walls of the reactor. The reactor lined out smoothly until the end of the run (about five bed turnovers (BTOs)).

The catalyst productivity was observed to be 26% higher with use of LUPASOL WF as compared to use of aluminum distearate as shown in Table 6 below. There was no discernable change in particle morphology as measured by the granular bulk density, average particle size (APS) or fines level with LUPASOL WF.

**Table 6. Effect of LUPASOL WF on XCAT EZ Metallocene Catalyst Activity**

| Continuity Additive | Aluminum Distearate | Lupasol WF |
|---|---|---|
| CA Level, ppmw | 5.6 | 1.5 |
| Catalyst Productivity, (material balance) (gm/gm) | 6790 | 8550 |

### Example 8

A test was carried out as in Example 7 using the same catalyst and reactor. However, no Lupasol additive was used. The reactor operated well for several hours at the same reactor conditons until temperature excursions were observed on several thermocouples mounted in the expanded and dome sections of the reactor. Visual observations through a sight glass on top of the reactor indicated formation of a dome sheet. The reactor was shut down and opened. A large dome sheet was found ridgidly adhered to the top dome section. Several days were required to remove the dome sheet by high pressure water blasting. This example shows the continuity advantage of the Lupasol WF.

### Commercial Evaluation of LUPASOL FG

The following tests were carried out in a semi-commercial gas phase reactor with diameter of 2.4 meters with a production rate of 4536-5443 kg/hr (10,000-12,000 lb/hr).

### Example 9

A test was carried out in the semi-commercial reactor while running on PRODIGY BMC-200 Catalyst to produce a bimodal product for pipe applications. Initially the reactor was operated using the CA-mixture as a continuity additive at a concentration of 46 ppmw based on production rate. The reactor was idled by stopping catalyst feed and CA-mixture co-feed and allowing the reaction to decay. This step was done to give technicians time to empty the continuity additive feeder of CA-mixture and refill with LUPASOL FG and mineral oil slurry. The LUPASOL FG concentration in the mineral oil was approximately 2 weight percent.

The above mentioned reactor was initially operated in steady state while feeding CA-mixture (mentioned above) as a continuity additive using PRODIGY BMC-200 Catalyst fed to the reactor as slurry to produce a bimodal type pipe product with 6.5 to 8 FI and a density of 0.9495 gm/cc at the following reaction conditions: reaction temperature of 105°C. ethylene partial pressure of 1.54 MPa (220 psia) hexene-to-ethylene molar ratio of 0.0042 and H2-to- ethylene molar ratio of 0.0019. The CA-mixture feed rate was approximately 50 ppmw based on ethylene feed rate. The reactor was later transitioned to operation with LUPASOL FG as a continuity additive by stopping PRODIGY BMC-200 catalyst feed as well as CA-mixture co-feed to the reactor. Following reaction die-off, the remaining bed was pre-treated with 10 ppmw LUPASOL FG based on bed weight. The skin thermocouples low temperature excursions (known as cold banding) began to improve while the bed is being pre-treated with the LUPASOL FG slurry. Following reestablishing PRODIGY BMC-200 catalyst feed, the reaction came on smoothly. LUPASOL FG feed was also established at a feed rate of approximately 10 ppmw based on ethylene feed rate. The skin thermocouple low temperature excursions (cold banding) that occurred during transition disappeared and the reactor operated smoothly at low level of LUPASOL FG co-feed of about 3 ppmw based on ethylene feed rate until the end of the run with no sheet or chunk formation. As shown in Table 7, the catalyst productivity showed an improvement of approximately 18 percent with LUPASOL FG as compared with CA-mixture

**Table 7. Effect of LUPASOL FG on PRODIGY BMC-200 Catalyst activity vs. CA-mixture**

| Continuity Additive | CA-mixture | LUPASOLFG |
|---|---|---|
| CA Level (ppmw) | 50 | 3 |
| Catalyst Productivity (mass balance) (gm/gm) | 6840 | 7900 |
| Catalyst Productivity (Zr XRF Basis) (gm/gm) | 6695 | 7900 |

The PRODIGY BMC-200 Catalyst productivity as measured using Zr XRF is corrected to account for the total amount of catalyst species present in the catalyst, not just those containing Zr.

As described above, embodiments disclosed herein may provide continuity additives comprising polyethyleneimines, for use in polymerization reactors, such as a gas-phase reactor for the production of polyolefins. Use of continuity additives according to embodiments disclosed herein may advantageously provide for prevention, reduction, or reversal of sheeting and other discontinuity events. Continuity additives according to embodiments disclosed herein may also provide for charge dissipation or neutralization without a negative effect on polymerization catalyst activity, as is commonly found to occur with conventional static control agents. Additionally, continuity additives according to embodiments disclosed herein may advantageously act as a scavenger in addition to providing static control properties.

Only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited.

## Claims

1. A polymerization process, comprising:
providing a polymerization reactor comprising a fluidized bed reactor, an entrainment zone, a catalyst feed for introducing a catalyst system capable of producing an olefin-based polymer, at least one ethyleneimine additive feed for the feeding of at least one ethyleneimine additive independently of the catalyst mixture;
(a) contacting the at least one olefin with the catalyst system under polymerization conditions in the fluidized bed reactor;
(b) introducing at least one ethyleneimine additive into the reactor system at anytime before, during, or after start of the polymerization reaction, wherein ethyleneimine additive comprises a polyethyleneimine, an ethyleneimine copolymer, or a mixture thereof:
(c) monitoring a level of electrostatic activity in the entrainment zone; and
(d) adjusting the amount of the at least one ethyleneimine additive introduced into the reactor system to maintain the levels of electrostatic activity in the entrainment zone at or near zero.

2. The polymerization process of claim 1, wherein the ethyleneimine additive is fed to the reactor in an amount ranging from 0.01 to 200 ppmw, based on polymer production rate.

3. The polymerization process of claim 1 or 2, wherein the ethyleneimine additive comprises polyethyleneimine and the polyethyleneimine additive is fed to the reactor in an amount ranging from 0.05 to 50 ppmw, based on polymer production rate.

4. The polymerization process of any one of claims 1-3, wherein the ethyleneimine additive has a number average molecular weight of less than 100000 Daltons.

5. The polymerization process of any one of claims 1-4, wherein the ethyleneimine additive has a number average molecular weight in the range from 500 to 25,000 Daltons.

6. The polymerization process of claim 1, wherein the ethyleneimine additive has a viscosity in the range from 2000 to 200000 cps as measured using a Brookfield viscometer at 20°C.

7. The polymerization process of any one of claims 1-6, further comprising combining the ethyleneimine addititive with a mineral oil or an aromatic hydrocarbon to form at least a portion of the ethyleneimine additive used in the feeding.

8. The polymerization process of claim 7, wherein the ethyleneimine additive is fed to the reactor as at least one of a suspension or a solution.

9. The polymerization process of any preceding claim, wherein the polymerizing comprises feeding a metallocene catalyst, a Ziegler-Natta catalyst, a chromium based catalyst, or a mixed catalyst system to the polymerization reactor.

10. The process of any one of the preceding claims, wherein the catalyst system comprises at least one metallocene catalyst.

11. The polymerization process of claim 11, wherein the mixed catalyst system is a bimetallic catalyst system.

12. The process of any one of claims 1 to 11, wherein the polymerization reactor comprises a gas -phase reactor.

13. The process of any one of claims 1-12, wherein the at least one olefin comprises at least one of ethylene and propylene.

14. The process of claim 13, wherein the at least one olefin further comprises at least one C₄ to C₈ alpha olefin.

15. A process for copolymerizing ethylene and one or more alpha olefins in a gas phase reactor utilizing a metallocene catalyst, activator and support, comprising:
combining ethylene and one or more of 1-butene, 1-hexene, 4-methylpent-1-ene, or 1-octene in the presence of a metallocene catalyst, an activator and a support;
monitoring static in said reactor by at least one recycle line static probe, at least one upper bed static probe, at least one annular disk static probe, or at least one distributor plate static probe;
maintaining the static at a desired level by use of at least one ethyleneimine additive comprising a polyethyleneimine, an ethyleneimine copolymer, or a mixture thereof, the at least one ethyleneimine additive present in said reactor in the range from 0.1 to 50 ppm, based on the weight of polymer produced by said combining.

## Patentansprüche

1. Polymerisationsverfahren, das umfasst:
Bereitstellen eines Polymerisationsreaktors, der einen Wirbelschichtreaktor, eine Mitnahmezone, eine Katalysatorzuführung zum Einbringen eines Katalysatorsystems, das zur Bildung eines Polymers auf Olefin-Basis befähigt ist, und mindestens eine Zuführung für einen Ethylenimin-Zusatzstoff zum Zuführen mindestens eines Ethylenimin-Zusatzstoffes unabhängig von dem Katalysator-Gemisch aufwesit;
(a) Inkontaktbringen mindestens eines Olefins mit dem Katalysatorsystem unter Polymerisationsbedingungen in dem Wirbelschichtreaktor;
(b) Einbringen mindestens eines Ethylenimin-Zusatzstoffes in das Reaktorsystem zu einem beliebigen Zeitpunkt vor, während oder nach dem Start der Polymerisationsreaktion, wobei der Ethylenimin-Zusatzstoff ein Polyethylenimin, ein Ethylenimin-Copolymer oder ein Gemisch davon sein kann;
(c) Überwachen des Niveaus elektrostatischer Aktivität in der Mitnahmezone; und
(d) Einstellen der Menge des mindestens einen Ethylenimin-Zusatzstoffes, die in das Reaktionssystem eingebracht wird, um die Niveaus der elektrostatischen Aktivität in der Mitnahmezone bei oder in der Nähe von Null zu halten.

2. Polymerisationsverfahren nach Anspruch 1, worin der Ethylenimin-Zusatzstoff in den Reaktor in einer Menge im Bereich von 0,01 bis 200 ppmw, auf der Basis der Polymerbildungsrate, zugeführt wird.

3. Polymerisationsverfahren nach Anspruch 1 oder 2, worin der Ethylenimin-Zusatzstoff Polyethylenimin umfasst und der Polyethylenimin-Zusatzstoff in den Reaktor in einer Menge im Bereich von 0,05 bis 50 ppmw, auf der Basis der Polymerbildungsrate, zugeführt wird.

4. Polymerisationsverfahren nach einem der Ansprüche 1 bis 3, worin der Ethylenimin-Zusatzstoff eine zahlenmittlere Molmasse von weniger als 100000 Dalton aufweist.

5. Polymerisationsverfahren nach einem der Ansprüche 1 bis 4, worin der Ethylenimin-Zusatzstoff eine zahlenmittlere Molmasse im Bereich von 500 bis 25000 Dalton aufweist.

6. Polymerisationsverfahren nach Anspruch 1, worin der Ethylenimin-Zusatzstoff eine unter Verwendung eines Brookfield-Viskosimeters bei 20 °C gemessene Viskosität im Bereich von 2000 bis 200000 cP aufweist.

7. Polymerisationsverfahren nach einem der Ansprüche 1 bis 6, das ferner umfasst, zur Bildung zumindest eines Teils des Ethylenimin-Zusatzstoffes, der zur Zuführung verwendet wird, den Ethylenimin-Zusatzstoff mit einem Mineralöl oder mit einem aromatischen Kohlenwasserstoff zu kombinieren.

8. Polymerisationsverfahren nach Anspruch 7, worin der Ethylenimin-Zusatzstoff dem Reaktor als Suspension und/oder Lösung zugeführt wird.

9. Polymerisationsverfahren nach einem der vorhergehenden Ansprüche, worin die Polymerisation umfasst, einen Metallocen-Katalysator, einen Ziegler-Natta-Katalysator, einen Katalysator auf Chrom-Basis oder ein gemischtes Katalysatorsystem in den Polymerisationsreaktor zuzuführen.

10. Polymerisationsverfahren nach einem der vorhergehenden Ansprüche, worin das Katalysatorsystem zumindest einen Metallocen-Katalysator umfasst.

11. Polymerisationsverfahren nach Anspruch 11, worin das gemischte Katalysatorsystem ein bimetallisches Katalysatorsystem ist.

12. Verfahren nach einem der Ansprüche 1 bis 11, worin der Polymerisationsreaktor einen Gasphasenreaktor umfasst.

13. Verfahren nach einem der Ansprüche 1 bis 12, worin das zumindest eine Olefin Ethylen und/oder Propylen umfasst.

14. Verfahren nach Anspruch 13, worin das zumindest eine Olefin ferner zumindest ein C₄-C₈-alpha-Olefin umfasst.

15. Verfahren zur Copolymerisation von Ethylen und einem oder mehreren alpha-Olefinen in einem Gasphasenreaktor unter Verwendung eines Metallocen-Katalysators, Aktivators und Trägers, das umfasst:
Zusammenbringen von Ethylen mit einer oder mehreren der folgenden Verbindungen: 1-Buten, 1-Hexen, 4-Methylpent-1-en oder 1-Octen in Gegenwart eines Metallocen-Katalysators, eines Aktivators und eines Trägers;
Überwachen der statischen Elektrizität in dem Reaktor mit Hilfe zumindest einer Rückführungsleitungssonde für statische Elektrizität, zumindest einer Oberbettsonde für statische Elektrizität, zumindest einer Ringscheibensonde für statische Elektrizität oder zumindest einer Verteilerplattensonde für statische Elektrizität;
Halten der statischen Elektrizität durch Verwendung eines Ethylenimin-Zusatzstoffes, der ein Polyethylenimin, ein Ethylenimin-Copolymer oder ein Gemisch davon umfasst, auf einem gewünschten Niveau, wobei das zumindest eine Ethylenimin-Additiv in dem Reaktor in einer Menge im Bereich von 0,1 bis 50 ppm, auf der Basis des Gewichts des durch die Kombination gebildeten Polymers, enthalten ist.

## Revendications

1. Procédé de polymérisation, comprenant :
réaliser un réacteur de polymérisation comprenant un réacteur à lit fluidisé, une zone d'entraînement, une amenée de catalyseur pour introduire un système de catalyseur apte à produire un polymère à base d'oléfine, au moins une amenée d'additif d'éthylène-imine pour l'amenée d'au moins un additif d'éthylène-imine indépendamment du mélange de catalyseur ;
(a) mettre en contact au moins une oléfine précitée avec le système de catalyseur sous des conditions de polymérisation dans le réacteur à lit fluidisé ;
(b) introduire au moins un additif d'éthylène-imine dans le système de réacteur à n'importe quel moment avant, durant et après le début de la réaction de polymérisation, où l'additif d'éthylène-imine comprend une polyéthylène-imine, un copolymère d'éthylène-imine ou un mélange de ceux-ci ;
(c) surveiller un niveau d'activité électrostatique dans la zone d'entraînement ; et
(d) ajuster la quantité du au moins un additif d'éthylène-imine introduit dans le système de réacteur afin de maintenir les niveaux de l'activité électrostatique dans la zone d'entraînement à ou près de zéro.

2. Procédé de polymérisation selon la revendication 1, dans lequel l'additif d'éthylène-imine est introduit dans le réacteur en une quantité de 0,01 à 200 ppmw, sur la base du taux de production de polymère.

3. Procédé de polymérisation selon la revendication 1 ou 2, dans lequel l'additif d'éthylène-imine comprend de la polyéthylène-imine, et l'additif de polyéthylène-imine est introduit dans le réacteur en une quantité de 0,05 à 50 ppww, sur la base du taux de production de polymère.

4. Procédé de polymérisation selon l'une quelconque des revendications 1 à 3, dans lequel l'additif d'éthylèneimine possède une masse moléculaire moyenne en nombre inférieure à 100000 Daltons.

5. Procédé de polymérisation selon l'une quelconque des revendications 1 à 4, dans lequel l'additif d'éthylèneimine possède une masse moléculaire moyenne en nombre dans la plage de 500 à 25000 Daltons.

6. Procédé de polymérisation selon la revendication 1, dans lequel l'additif d'éthylène-imine possède une viscosité dans la plage de 2000 à 200000 cps, comme mesurée en utilisant un viscosimètre de Brookfield à 20°C.

7. Procédé de polymérisation selon l'une quelconque des revendications 1 à 6, comprenant en outre la combinaison de l'additif d'éthylène-imine avec une huile minérale ou un hydrocarbure aromatique pour former au moins une portion de l'additif d'éthylène-imine utilisé dans l'amenée.

8. Procédé de polymérisation selon la revendication 7, dans lequel l'additif d'éthylène-imine est introduit dans le réacteur comme au moins une d'une suspension ou d'une solution.

9. Procédé de polymérisation selon l'une quelconque des revendications précédentes, dans lequel la polymérisation comprend l'amenée d'un catalyseur métallocène, d'un catalyseur Ziegler-Natta, d'un catalyseur à base de chrome ou d'un système de catalyseurs mélangés dans le réacteur de polymérisation.

10. Procédé selon l'une quelconque des revendications précédentes, dans lequel le système de catalyseur comprend au moins un catalyseur métallocène.

11. Procédé de polymérisation selon la revendication 9, dans laquelle le système de catalyseurs mélangés est un système de catalyseur bimétallique.

12. Procédé selon l'une quelconque des revendications 1 à 11, dans lequel le réacteur de polymérisation comprend un réacteur en phase gazeuse.

13. Procédé selon l'une quelconque des revendications 1 à 12, dans lequel la au moins une oléfine comprend au moins un d'éthylène et de propylène.

14. Procédé selon la revendication 13, dans lequel la au moins une oléfine comprend en outre au moins une alphaoléfine en C₄ à C₈.

15. Procédé pour la copolymérisation d'éthylène et d'une ou de plusieurs alpha oléfines dans un réacteur en phase gazeuse en utilisant un catalyseur métallocène, un activateur et support, comprenant :
la combinaison d'éthylène et d'un ou de plusieurs de 1-butène, 1-hexène, 4-méthylpent-I-ène, ou I-octène en présence d'un catalyseur métallocène, d'un activateur et d'un support ;
la surveillance de la statique dans ledit réacteur par au moins une sonde statique de conduite de recyclage, au moins une sonde statique de lit supérieur, au moins une sonde statique de disque annulaire ou au moins une sonde statique de plaque de distributeur ;
le maintien de la statique à un niveau souhaité en utilisant au moins un additif d'éthylène-imine comprenant une polyéthylène-imine, un copolymère d'éthylène-imine ou un mélange de ceux-ci, le au moins un additif d'éthylèneimine étant présent dans ledit réacteur dans la plage de 0,1 à 50 ppm, sur la base du poids du polymère produit par ladite combinaison.
